# EUROPEAN PATENT APPLICATION

(11) **EP 3 712 977 A1**
(43) Date of publication of application: **23.09.2020**
(21) Application number: 20164031.5
(22) Date of filing: 18.03.2020
(51) Int. Cl.: H01M 2/02

(54) **BATTERY AND DEVICE USING THE SAME**

(30) Priority: 22.03.2019 CN 201910224250; 29.07.2019 US 201916524404
(71) Applicant: Ningde Amperex Technology Ltd., Ningde City, Fujian (CN)
(72) Inventor: TIAN, Jiao, Ningde City, Fujian (CN)
(74) Representative: CMS Cameron McKenna Nabarro Olswang LLP

(57) **Abstract**

An impact-proofed battery includes a packaging film, an electrode assembly received in the packaging film, tabs extending from an end portion of the electrode assembly, and insulating layers. Each tab includes a connecting region, a packaging region, and an exposed region connected in the order written. The connecting region is electrically connected to the electrode assembly, and the eaxposed region is exposed from the packaging film. Each insulating layer includes a packaging portion and a protective portion connecting to the packaging portion. The packaging portion covers the packaging region and is between the packaging film and the packaging region. The protective portion is between the connecting region and the packaging film, and an area of the protective portion is greater than an area of the connecting region. The disclosure also provides a device using the battery.

## Description

### FIELD OF THE INVENTION

The disclosure generally relates to batteries, in particular, to a battery and a device using the battery.

### BACKGROUND

Safety of electronic products is important. Specifically, the impact-proof of electronic products is one of safety factors of concern. As an integral part of the electronic products, batteries must have the same qualities. When the electronic product is dropped, the battery may be easily pierced by the tab in the packaging film of the battery, the top of the packaging film may also be easily broken by an impact to the electronic product.

What is needed, is a battery with improved safety features and reliability.

### SUMMARY OF THE INVENTION

A battery includes a packaging film, an electrode assembly received in the packaging film, tabs extending from an end portion of the electrode assembly, and insulating layers. Each of the tabs includes a connecting region, a packaging region, and an exposed region connected in the order written. The connecting region is electrically connected to the electrode assembly, and the exposed region is exposed from the packaging film. Each of the insulating layers includes a packaging portion and a protective portion connecting to the packaging portion. The packaging portion covers the packaging region and is located between the packaging film and the packaging region. The protective portion is located between the connecting region and the packaging film, and an area of the protective portion is greater than an area of the connecting region.

Further, the protective portion is located on an outer surface of the connecting region.

Further, the connecting region includes a plurality of sub-tabs and each of the insulating layers includes a plurality of the protective portions. Each sub-tab is covered by one protective portion, and the protective portions are independent of each other or integrally connected to each other.

Further, the tabs include at least one positive tab and at least one negative tab. The packaging region of each positive tab and the packaging region of each negative tab are covered by the packaging portions. The packaging portion covering each positive tab and the packaging portion covering each negative tab are independent of each other or can be integrally connected to each other. The protective portion corresponding to each positive tab and the protective portion corresponding to each negative tab are independent of each other or can be integrally connected to each other.

Further, each of the insulating layers further includes an adhesive portion, the adhesive portion bonds the connecting region with the protective portion.

Further, an end of the protective portion facing away from the packaging portion is located on an outer surface of the electrode assembly.

Further, each of the insulating layers further includes an adhesive portion, the adhesive portion bonds the protective portion with the electrode assembly.

Further, each of the insulating layers further includes an adhesive portion, the adhesive portion bonds the protective portion with the packaging film.

Further, the protective portion is located on an outer surface of the connecting region.

Further, a thickness of the packaging portion is about 5 µm to about 200 µm, and a thickness of the protective portion is about 5 µm to about 200 µm.

A device includes the battery. The battery includes a packaging film, an electrode assembly received in the packaging film, tabs extending from an end portion of the electrode assembly, and insulating layers. Each of the tabs includes a connecting region, a packaging region, and an exposed region connected in the order written. The connecting region is electrically connected to the electrode assembly, and the exposed region is exposed from the packaging film. Each of the insulating layers includes a packaging portion and a protective portion connecting to the packaging portion. The packaging portion covers the packaging region and is located between the packaging film and the packaging region. The protective portion is located between the connecting region and the packaging film, and an area of the protective portion is greater than an area of the connecting region.

In the battery of the present disclosure, the protective portion is located between the connecting region and the packaging film, and an area of the protective portion is greater than an area of the connecting region. Direct contact between the connecting region and the packaging region is thus prevented, piercing of the packaging film when the connecting region and the packaging region are subjected to jarring or impact does not occur. The safety and reliability of the battery disclosed are improved.

### BRIEF DESCRIPTION OF THE DRAWINGS

Implementations of the present disclosure will now be described, by way of embodiments, with reference to the attached figures.
FIG. 1 is a cross-sectional view of a first embodiment of part of a battery.
FIG. 2 is a diagram of an embodiment of a battery.
FIG. 3 is a cross-sectional view of an embodiment of packaging regions covered by packaging portions.
FIG. 4 is a cross-sectional view of an embodiment of connecting regions covered by protective portions.
FIG. 5 is a cross-sectional view of another embodiment of packaging regions covered by packaging portions.
FIG. 6 is a cross-sectional view of another embodiment of connecting regions covered by protective portions.
FIG. 7 is a cross-sectional view of a fourth embodiment of part of a battery.
FIG. 8 is a cross-sectional view of another embodiment of sub-tabs covered by protective portions.
FIG. 9 is a cross-sectional view of a sixth embodiment of part of a battery.
FIG. 10 is a cross-sectional view of a seventh embodiment of part of a battery.
FIG. 11 is a cross-sectional view of an eighth embodiment of part of a battery.
FIG. 12 is a cross-sectional view of a ninth embodiment of part of a battery.
FIG. 13 is a cross-sectional view of a tenth embodiment of part of a battery.
FIG. 14 is a cross-sectional view of an eleventh embodiment of part of a battery.
FIG. 15 is a diagram of an embodiment of a battery.
FIG. 16 is a diagram of an embodiment of a battery.
FIG. 17 is a cross-sectional view of a seventh embodiment of part of a battery.
FIG. 18 is a diagram of an embodiment of a device containing a battery.

### DETAILED DESCRIPTION OF THE INVENTION

Implementations of the disclosure will now be described, by way of embodiments only, with reference to the drawings. The disclosure is illustrative only, and changes may be made in the detail within the principles of the present disclosure. It will, therefore, be appreciated that the embodiments may be modified within the scope of the claims.

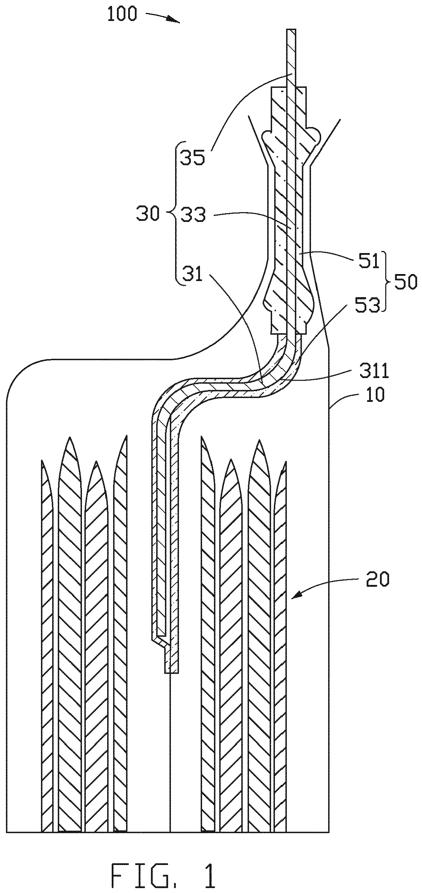

FIG. 1 illustrates an embodiment of a battery 100. The battery 100 includes a packaging film 10, an electrode assembly 20, tabs 30, and insulating layers 50. The electrode assembly 20 is received in the packaging film 10. Each tab 30 extends from an end portion of the electrode assembly 20.

Each tab 30 includes a connecting region 31, a packaging region 33, and an exposed region 35 connected in the order written. The connecting region 31 is electrically connected to the electrode assembly 20. The exposed region 35 is exposed from the packaging film 10.

Each insulating layer 50 includes a packaging portion 51 and a protective portion 53 connecting to the packaging portion 51. The packaging portion 51 covers the packaging region 33 and is located between the packaging film 10 and the packaging region 33. The protective portion 53 is located between the connecting region 31 and the packaging film 10, and an area of the protective portion 53 is greater than an area of the connecting region 31. Direct contact between the connecting region 31 and the packaging region 33 is thus prevented, and the packaging film 10 is protected from being pierced when jarred or impacted. An area of a structure of the present disclosure is a superficial area of the largest surface of the structure. In the illustrated embodiment, the area of the protective portion 53 is an area of a surface of the protective portion 53 in contact with the connecting region 31, and the area of the connecting region 31 is an area of a surface of the connecting region 31 in contact with the protective portion 53.

In a first embodiment, referring to FIG. 1, the protective portion 53 is located on an outer surface 311 of the connecting region 31. Any burrs or projections from the connecting region 31 thus cannot pierce the packaging film 10, and the connecting region 31 and the electrode assembly 20 will not be short circuited by any contact. The protective portion 53 also acts as a buffer between the electrode assembly 20 and a top of the packaging film 10 when the battery 100 suffers impact or jarring. Safety and reliability of the battery 100 are thus further improved.

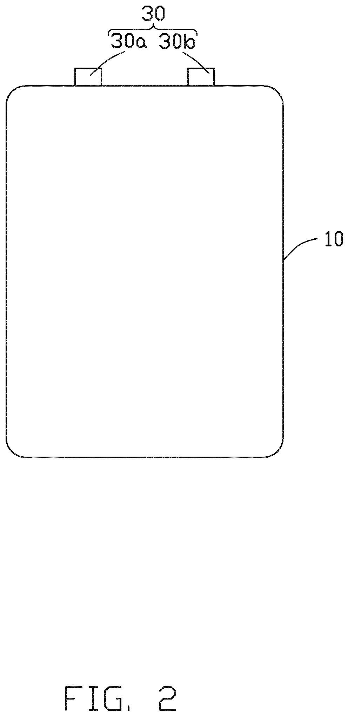

In at least one embodiment, referring to FIG. 2, the number of the tabs 30 is two, being a positive tab 30a and a negative tab 30b.

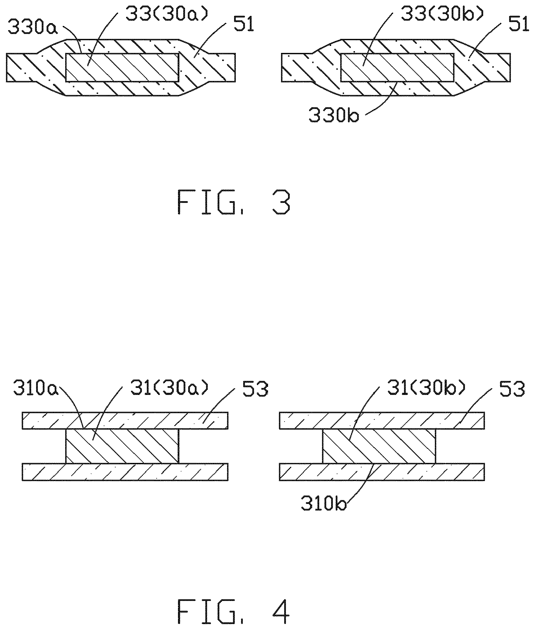

Referring to FIG. 3, an outer surface 330a of the packaging region 33 of the positive tab 30a and an outer surface 330b of the packaging region 33 of the negative tab 30b are respectively covered by one packaging portion 51. The packaging portion 51 covering the packaging region 33 of the positive tab 30a and the packaging portion 51 covering the packaging region 33 of the negative tab 30b are independent of each other.

Referring to FIG. 4, an outer surface 310a of the connecting region 31 of the positive tab 30a and an outer surface 310b of the connecting region 31 of the negative tab 30b are respectively covered by one protective portion 53. The protective portion 53 covering the connecting region 31 of the positive tab 30a and the protective portion 53 covering the connecting region 31 of the negative tab 30b are independent of each other.

In at least one embodiment, a thickness of the packaging portion 51 is about 5 µm to about 200 µm, and a thickness of the protective portion 53 is about 5 µm to about 200 µm.

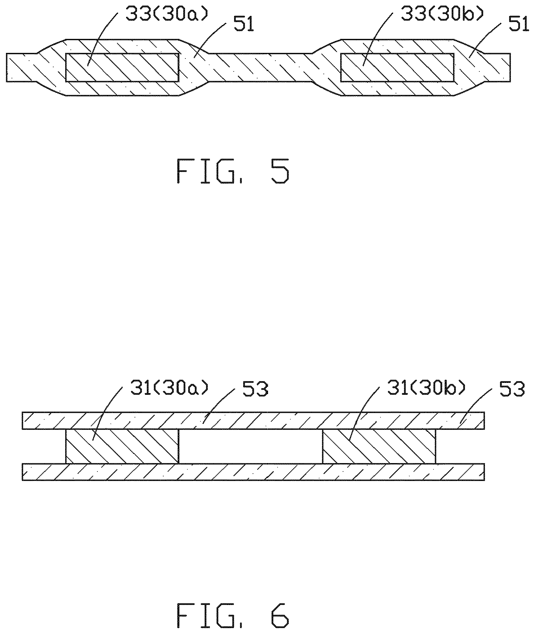

In a second embodiment, referring to FIG. 5, different from the first embodiment in that the packaging portion 51 covering the packaging region 33 of the positive tab 30a is integrally connected to the packaging portion 51 covering the packaging region 33 of the negative tab 30b.

In a third embodiment, referring to FIGS. 5 and 6, different from the first embodiment in that the packaging portion 51 covering the packaging region 33 of the positive tab 30a is integrally connected to the packaging portion 51 covering the packaging region 33 of the negative tab 30b. The protective portion 53 covering the connecting region 31 of the positive tab 30a is integrally connected to the protective portion 53 covering the connecting region 31 of the negative tab 30b.

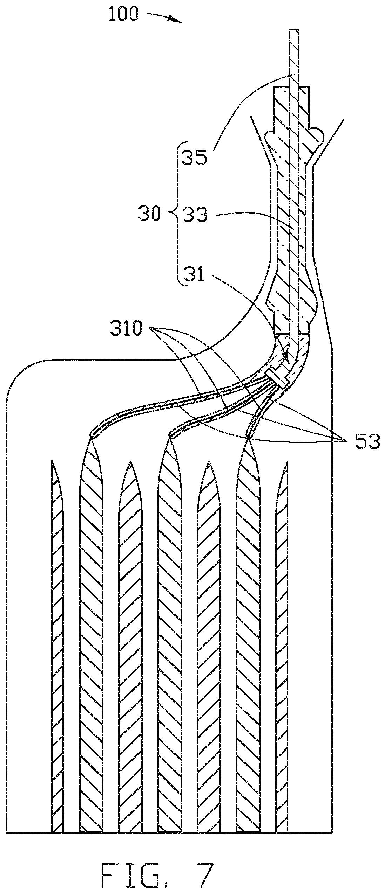

In a fourth embodiment, referring to FIG. 7, different from the first embodiment in that the connecting region 31 of each tab 30 includes a plurality of sub-tabs 310, and each insulating layer 50 includes a packaging portion 51 and a plurality of the protective portions 53 connecting to the packaging portion 51. Each sub-tab 310 is covered by one of the plurality of the protective portions 53, and the plurality of the protective portions 53 are independent of each other.

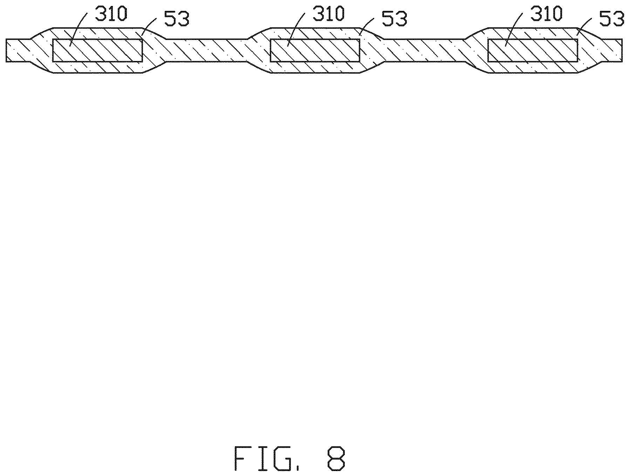

In a fifth embodiment, referring to FIG. 8, different from the fourth embodiment in that the plurality of the protective portions 53 covering the sub-tabs 310 in a same tab 30 are integrally connected to each other.

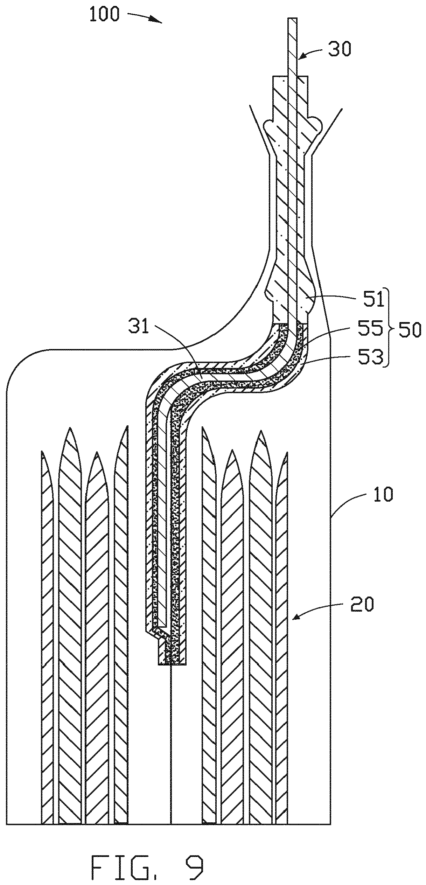

In a sixth embodiment, referring to FIG. 9, different from the first embodiment in that each insulating layer 50 further includes an adhesive portion 55, and the adhesive portion 55 is located between the connecting region 31 and the protective portion 53 to bond the connecting region 31 with the protective portion 53. Displacement is reduced between the tabs 30, the electrode assembly 20, and the packaging film 10 when the battery 100 is impacted. Therefore, the effect of impact of the tabs 30 and the electrode assembly 20 on the top of the packaging film 10 is further reduced, thereby improving the safety and reliability of the battery 100.

In at least one embodiment, a thickness of the adhesive portion 55 is about 5 µm to about 200 µm.

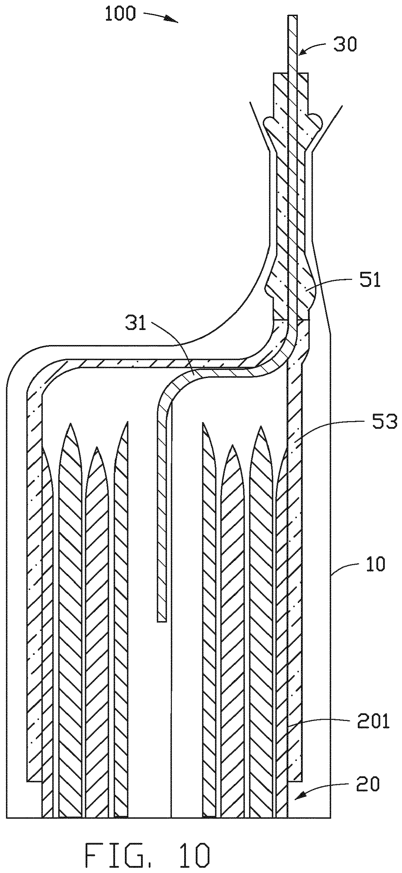

In a seventh embodiment, referring to FIG. 10, an end of the protective portion 53 facing away from the packaging portion 51 is located on an outer surface 201 of the electrode assembly 20. The protective portion 53 is located between the electrode assembly 20 and the top of the packaging film 10, and located between the connecting region 31 and the top of the packaging film 10.

The protective portion 53 acts as a buffer against impact to the electrode assembly 20 and the connecting region 31 on the top of the packaging film 10 when the battery 100 is impacted, the electrode assembly 20 and the connecting region 31 are not able to pierce the top of the packaging film 10.

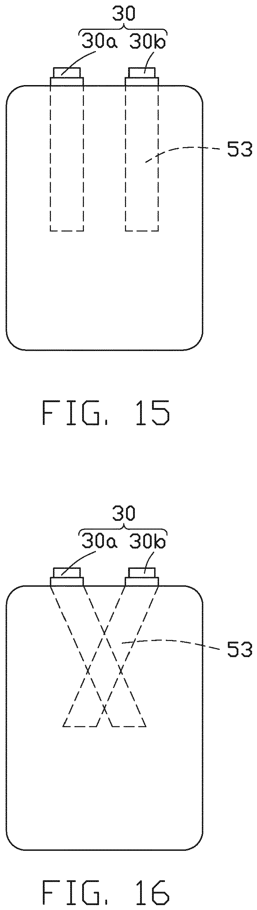

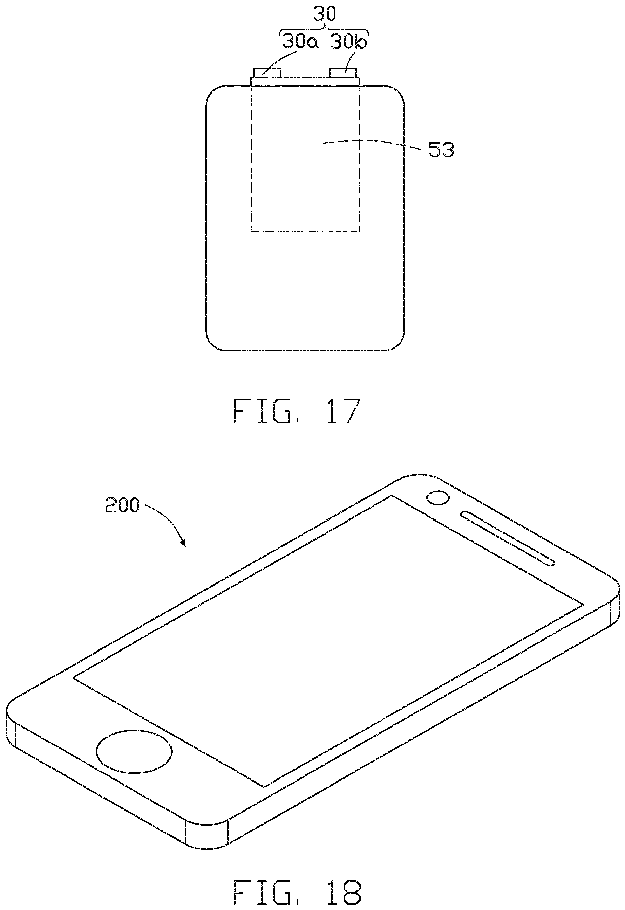

In at least one embodiment, referring to FIGS. 10 and 15, the number of the tabs 30 is two, being a positive tab 30a and a negative tab 30b. The protective portion 53 corresponding to the positive tab 30a and the protective portion 53 corresponding to the negative tab 30b are independent of each other. In at least one embodiment, the protective portion 53 corresponding to the positive tab 30a and the protective portion 53 are disposed in parallel with each other on the outer surface 201 of the electrode assembly 20. In at least one embodiment, referring to FIG. 16, the protective portion 53 corresponding to the positive tab 30a and the protective portion 53 may intersect on the outer surface 201 of the electrode assembly 20. In at least one embodiment, referring to FIG. 17, the protective portion 53 corresponding to the positive tab 30a may be integrally connected to the protective portion 53.

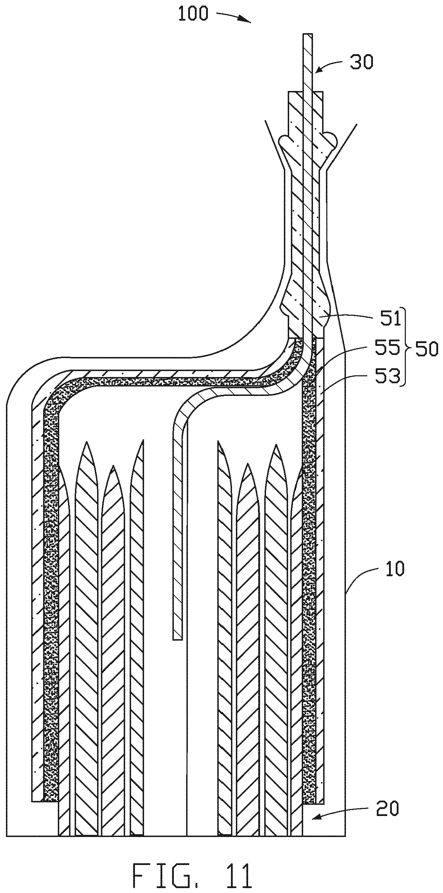

In an eighth embodiment, referring to FIG. 11, different the seventh embodiment in that each insulating layer 50 further includes an adhesive portion 55, and the adhesive portion 55 is located between the electrode assembly 20 and the protective portion 53 to bond the electrode assembly 20 with the protective portion 53. Displacement between the tabs 30, the electrode assembly 20, and the packaging film 10 is thus reduced when the battery 100 is impacted. Therefore, impact of the tabs 30 and the electrode assembly 20 on the top of the packaging film 10 is further reduced, thereby improving the safety and reliability of the battery 100.

In at least one embodiment, the adhesive portion 55 is formed on the whole surface of the protective portion 53 facing the electrode assembly 20. In at least one embodiment, the adhesive portion 55 may be formed on a partial region of the surface of the protective portion 53 facing the electrode assembly 20, such that the adhesive portion 55 bonding the electrode assembly 20 with the protective portion 53 is sufficient.

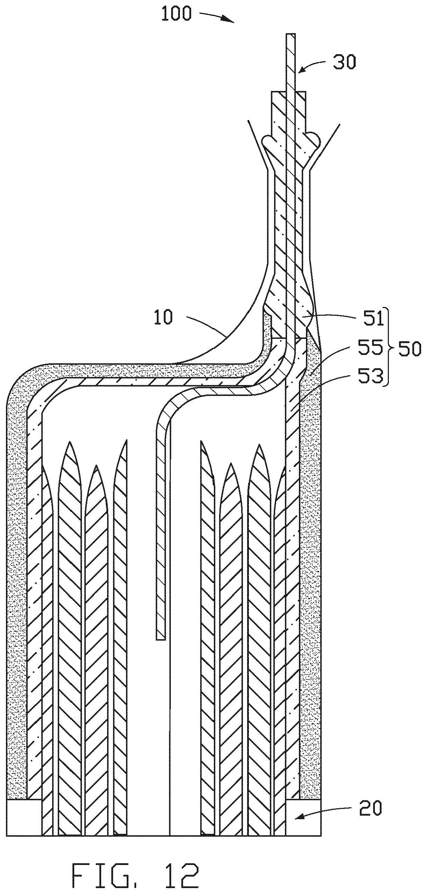

In a ninth embodiment, referring to FIG. 12, different from the seventh embodiment in that each insulating layer 50 further includes an adhesive portion 55, and the adhesive portion 55 is located between the packaging film 10 and the protective portion 53 to bond the packaging film 10 with the protective portion 53.

In at least one embodiment, the adhesive portion 55 is formed on the whole surface of the protective portion 53 facing away from the electrode assembly 20. In at least one embodiment, the adhesive portion 55 may be formed on a partial region of the surface of the protective portion 53 facing away from the electrode assembly 20, such that the adhesive portion 55 bonding the packaging film 10 with the protective portion 53 is sufficient.

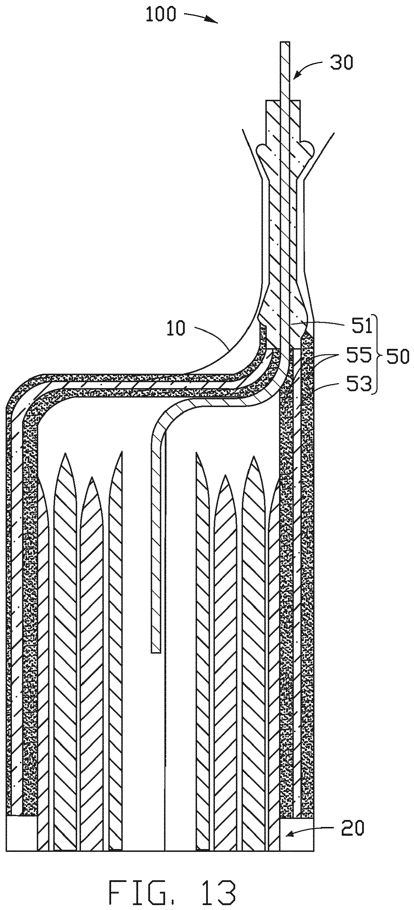

In a tenth embodiment, referring to FIG. 13, different from the seventh embodiment in that each insulating layer 50 further includes an adhesive portion 55, and the adhesive portion 55 is located between the electrode assembly 20 and the protective portion 53 and located between the protective portion 53 and the packaging film 10 to bond the electrode assembly 20, the tabs 30 with the packaging film 10.

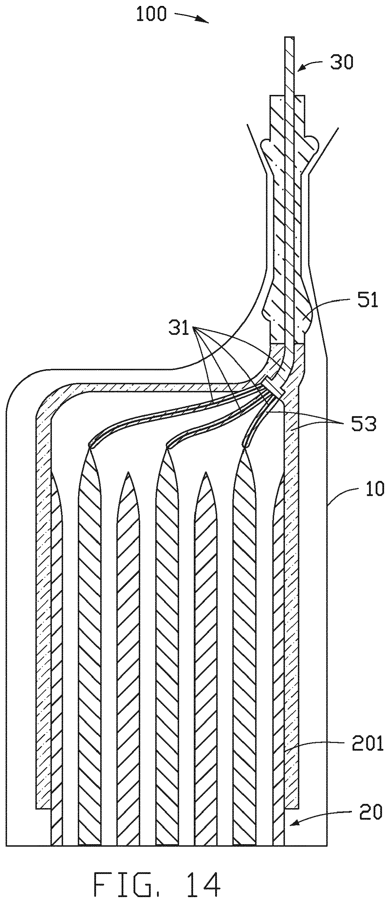

In an eleventh embodiment, referring to FIG. 14, different from the seventh embodiment in that the protective portion 53 is also disposed on an outer surface 310 of the connecting region 31. The protective portion 53 having one end on the outer surface 201 of the electrode assembly 20 buffers impacts against the electrode assembly 20 and the connecting region 31 on the top of the packaging film 10 when the battery 100 is impacted. The electrode assembly 20 and the connecting region 31 thus do not pierce the top of the packaging film 10. The protective portion 53 disposed on the outer surface 310 of the connecting region 31 prevents the connecting region 31 and the electrode assembly 20 from coming into contact and thus avoids a short circuit between the connecting region 31 and the electrode assembly 20.

In at least one embodiment, the connecting region 31 may include a plurality of sub-tabs.

Referring to FIG. 18, the battery 100 can be used in many devices 200, such as electronic devices, mechanical devices, or automobiles. The electronic devices may be mobile phones, pads, computers, or cameras.

The disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the claims.

## Claims

1. A battery (100), **characterized in that**, the battery (100) comprises:
a packaging film (10);
an electrode assembly (20) received in the packaging film (10);
tabs (30) extending from an end portion of the electrode assembly (20); and
insulating layers (50);
wherein each of the tabs (30) comprises a connecting region (31), a packaging region (33) and an exposed region (35) connected in the order written; the connecting region (31) is electrically connected to the electrode assembly (20), and the exposed region (35) is exposed from the packaging film (10); each of the insulating layers (50) comprises a packaging portion (51) and a protective portion (53) connecting to the packaging portion (51); the packaging portion (51) covers the packaging region (33) and is located between the packaging film (10) and the packaging region (33); and the protective portion (53) is located between the connecting region (31) and the packaging film (10), and an area of the protective portion (53) is greater than an area of the connecting region (31).

2. The battery (100) of claim 1, **characterized in that**, the protective portion (53) is located on an outer surface (310a, 310b) of the connecting region (31).

3. The battery (100) of claim 2, **characterized in that**, the connecting region (31) comprises a plurality of sub-tabs (310), each of the insulating layers (50) comprises a plurality of the protective portions (53), each of the plurality of sub-tabs (310) is covered by one of the plurality of the protective portions (53), and the plurality of the protective portions (53) are independent of each other or integrally connected to each other.

4. The battery (100) of claim 1, **characterized in that**, the tabs (30) are at least one positive tab (30a) and at least one negative tab (30b); the packaging region (33) of each of the at least one positive tab (30a) and the packaging region (33) of each of the at least one negative tab (30b) are respectively covered by the packaging portion (51); the packaging portion (51) covering each of the at least one positive tab (30a) and the packaging portion (51) covering each of the at least one negative tab (30b) are independent of each other or integrally connected to each other; the protective portion (53) corresponding to each of the at least one positive tab (30a) and the protective portion (53) corresponding to each of the at least one negative tab (30b) are independent of each other or integrally connected to each other.

5. The battery (100) of claim 1, **characterized in that**, each of the insulating layers (50) further comprises an adhesive portion (55), the adhesive portion (55) bonds the connecting region (31) with the protective portion (53).

6. The battery (100) of claim 1, **characterized in that**, an end of the protective portion (53) facing away from the packaging portion (51) is located on an outer surface (201) of the electrode assembly (20).

7. The battery (100) of claim 6, **characterized in that**, each of the insulating layers (50) further comprises an adhesive portion (55), the adhesive portion (55) bonds the protective portion (53) to the electrode assembly (20).

8. The battery (100) of claim 6, **characterized in that**, each of the insulating layers (50) further comprises an adhesive portion (55), the adhesive portion (55) bonds the protective portion (53) with the packaging film (10).

9. The battery (100) of claim 5, 7 or 8, **characterized in that**, a thickness of the adhesive portion (55) is 5 µm to 200 µm.

10. The battery (100) of claim 6, **characterized in that**, the protective portion (53) is located on an outer surface (310a, 310b) of the connecting region (31).

11. The battery (100) of claim 1, **characterized in that**, a thickness of the packaging portion (51) is 5 µm to 200 µm.

12. The battery (100) of claim 1, **characterized in that**, a thickness of the protective portion (53) is 5 µm to 200 µm.

13. A device, **characterized in that**, comprising a battery cell of any one of claims 1 to 14.
